# EUROPÄISCHE PATENTSCHRIFT

(11) **EP 1 239 951 B1**
(45) Veröffentlichungstag und Bekanntmachung des Hinweises auf die Patenterteilung: **15.03.2006**
(21) Anmeldenummer: 00984878.9
(22) Anmeldetag: 28.10.2000
(51) Int. Cl.: B01J 19/00, B01F 5/06

(54) **MODULARES MIKROREAKTIONSSYSTEM**
MODULAR MICROREACTION SYSTEM
SYSTEME DE MICROREACTION MODULAIRE

(30) Priorität: 08.12.1999 DE 19959249
(43) Veröffentlichungstag der Anmeldung: 18.09.2002
(73) Patentinhaber: INSTITUT FÜR MIKROTECHNIK MAINZ GmbH, 55129 Mainz-Hechtsheim (DE)
(72) Erfinder: LÖWE, Holger, 55276 Oppenheim (DE); HAUSNER, Oliver, 21147 Hamburg (DE); RICHTER, Thomas, 42107 Wuppertal (DE)
(74) Vertreter: Weber, Dieter
(86) Internationale Anmeldenummer: PCT/DE2000/003844
(87) Internationale Veröffentlichungsnummer: WO 2001/041916

(56) Entgegenhaltungen:
- EP-A- 1 031 375
- DE-A- 4 308 697
- DE-A- 19 708 472
- DE-A- 19 748 481

## Beschreibung

Die Erfindung betrifft ein modulares Mikroreaktionssystem, das zur Durchführung von Flüssig- oder Gasphasenreaktionen, zum Mischen, Kühlen, Erwärmen von Fluiden oder Kombinationen davon geeignet ist.

Das erfindungsgemäße Mikroreaktionssystem weist ein Gehäuse und darin untergebrachte funktionale Grundmodule auf, wobei das Gehäuse wenigstens einen Fluideinlaß und wenigstens einen Fluidauslaß hat und die Grundmodule in dem Gehäuse in Reihe hintereinander angeordnet und so ausgebildet sind, daß sie aufeinanderfolgend von Fluid durchströmbar sind. Wenigstens einige der Grundmodule sind aus mehreren fest oder lösbar miteinander verbundenen, plattenartigen, im wesentlichen rechteckigen, übereinandergeschichteten Folien unter Ausbildung eines Folienstapels aufgebaut, wobei eine oder mehrere der Folien auf einer oder beiden Oberflächen mikrostrukturierte Kanäle, Sensorelemente, Heizelemente oder Kombinationen davon aufweisen. Weiterhin weist jeder Folienstapel wenigstens eine Folie auf, die auf ihrer Oberfläche mit Kanälen versehen ist, welche so ausgebildet sind, daß sie für eine Fluidleitung von einer Seite des Folienstapels zur gegenüberliegenden Seite oder zu einer angrenzenden Seite des Folienstapels führen.

Aus der DE-OS 197 48 481 ist ein Mikroreaktor bekannt, der sich insbesondere für die Durchführung von heterogenen Gasphasenreaktionen eignet. Der Mikroreaktor besteht aus einem länglichen Gehäuse mit zwei Gaseinlässen, die einander gegenüberliegend in den Gehäuseseitenwänden angeordnet sind. Die Gaseinlässe münden jeweils in eine Zufuhrkammer, die beidseitig eines Führungsbauteils angeordnet sind. Das Führungsbauteil besteht aus mit Nuten versehenen Folien mindestens zweier Arten A und B, die beim Übereinanderschichten je eine Schar von Kanälen bilden, welche die beidseitig von den Gaseinlaßöffnungen in das Führungsbauteil einströmenden Gase um 90° zu einer sich an das Führungsbauteil anschließenden Mischkammer umlenken, wo sich die beiden zugeführten Gase vermischen können. An die Mischkammer schließt sich eine Reaktionsstrecke an, die ebenfalls aus mit Nuten versehenen, übereinandergeschichteten, plattenartigen Elementen besteht und die Mischkammer mit einer hinter der Reaktionsstrecke vorgesehen Auslaßkammer verbindet. Die Nuten oder Kanäle in der Reaktionsstrecke sind mit einem Katalysatormaterial beschichtet oder bestehen aus einem solchen. Hinter der Auslaßkammer weist das Gehäuse des Mikroreaktors eine Auslaßöffnung auf, durch welche das Produktgas ausgeleitet wird. Die plattenartigen Elemente des Führungsbauteils und der Reaktionsstrecke lassen sich austauschen, indem sie einzeln aus dem Gehäuse herausgenommen und durch andere Elemente ersetzt werden. Um eine Bewegung der plattenartigen Elemente in Längsrichtung des Gehäuses oder seitwärts zu verhindern und damit die durchströmenden Gase nicht an den Stapeln aus plattenartigen Elementen vorbeiströmen, ist der Gehäuseinnenraum exakt an die Abmessungen der plattenartigen Elemente angepaßt. Der im wesentlichen rechteckförmige Innenraum des Gehäuses weist an den Stellen, wo die plattenartigen Elemente eingesetzt sind, den Innenraum verbreiternde Ausnehmungen auf. Länge und Breite der Ausnehmungen in dem Gehäuseinnenraum sind so bemessen, daß sie die plattenförmigen Elemente exakt aufnehmen. Das Gehäuse ist somit für ein paßgenaues Einsetzen hinsichtlich Länge und Breite der plattenartigen Elemente ausgelegt.

Ein Nachteil dieses bekannten Mikroreaktors besteht darin, daß in das Gehäuse nur plattenartige Elemente eingesetzt werden können, die in ihrer Länge und Breite genau den in dem Gehäuse vorgesehenen Aussparungen entsprechen. Weiterhin können in ein solches Gehäuse nicht mehr oder weniger Stapel aus plattenartigen Elementen eingesetzt werden, als dies durch die Gehäuseausgestaltung vorgegeben ist. Ein weiterer Nachteil dieses bekannten Mikroreaktors besteht darin, daß sich die plattenartigen Elemente während des Betriebs häufig ausdehnen und verziehen. Da die Ausdehnung durch die Gehäusewand und die darin vorgesehenen Ausnehmungen begrenzt wird, kommt es zum einen dazu, daß sich die plattenartigen Elemente unter dem Druck der Ausdehnung wölben und damit eine gasundurchlässige Abdichtung zwischen den einzelnen Elementen nicht mehr gewährleistet ist. Darüber hinaus kommt es dazu, daß sich die plattenartigen Elemente in die Gehäusewand einpressen oder verkeilen und sich später nicht mehr oder nur unter großen Mühen aus dem Gehäuse entnehmen lassen.

Die DE 43 08 697 A1 beschreibt ein Verfahren und eine Vorrichtung zum Anreichern, d. h. Mischen eines ersten gasförmigen oder flüssigen Mediums mit einem zweiten Gas oder einer Flüssigkeit in einem Reaktor, bei dem eine wesentlich größere Fläche für den Stoffaustausch zur Verfügung steht als bei bekannten Systemen. Die Module gemäß DE 43 08 697 A1 bestehen aus nebeneinander angeordneten Kapillar-Hohlfasern, wobei mehrere Lagen solcher Kapillar-Hohlfasern in sich kreuzender Weise übereinander angeordnet sein können. Mehrere Lagen dieser Kapillar-Hohlfasern sind in einen Rahmen eingespannt, wobei die Hohlfasern gegeneinander bzw. gegenüber dem Rahmen abgedichtet sein können. Dies trifft nur auf die Enden der Kapillar-Hohlfasern zwischen den Rahmenelementen und gegebenenfalls außerhalb davon zu, da ansonsten ein Durchströmen der Ebenen aus Kapillar-Hohlfasern in senkrechter Richtung nicht mehr möglich wäre. Bei den Kapillar-Hohlfasern handelt es sich um isotrope, mikroporöse Polysulfone oder perforierte Schläuche. Für die Anreicherung eines Fluides II wird dieses durch die Kapillar-Hohlfasern geleitet, wobei es durch die Mikroporen der Hohlfasern austreten kann. Das Hauptfluid 1 wird senkrecht zur Ebene der nebeneinander angeordneten Hohlfasern durch die Module geleitet, wobei es das aus den Fasern austretende Fluid II mitnimmt und sich mit diesem vermischt. Die Hauptströmungsrichtung in dem Gehäuse, in dem die Rahmen mit Kapillar-Hohlfaserlagen gestapelt sein können, ist die Richtung senkrecht zu den Ebenen aus nebeneinander angeordneten Kapillar-Hohlfasern. Die Figuren 8 und 9 der DE 43 08 697 A1 zeigen Gehäuse mit mehreren darin übereinander gestapelten Kapillar-Hohlfasermodulen, die alle in senkrechter Richtung von einem Fluid I durchströmt werden. Fluid II wird am oberen Ende des Gehäuses eingeleitet und strömt dann mäanderförmig durch die einzelnen Kapillar-Hohlfasermodule nach unten. Der Strömungsweg von Fluid II wird in dem Gehäuse von darin vorgesehenen Trennplatten gelenkt. Die Trennplatten sollen dafür sorgen, dass das Fluid II nacheinander durch mehrere der geschichteten Kapillar-Hohlfaserlagen strömt. Die Hauptströmungsrichtung von Fluid I in dem Gehäuse verläuft senkrecht zu den Ebenen aus Kapillar-Hohlfasern.

Die EP 1 031 375 A2 (Veröffentlicht nach dem Prioritätsdatum dieser Anmeldung) beschreibt einen Mikroreaktor, in dem die chemische Prozessführung in horizontalen Räumen stattfindet, die von zwei oder mehreren übereinander gestapelten Platten oder Schichten gebildet werden, wobei diese Platten oder Schichten integrierte Abdichtzonen aufweisen, die eine flüssigkeits- und gasdichte Verbindung zwischen jeweils zwei aufeinanderfolgenden Schichten und nach außen herbeiführen, und wobei die Platten oder Schichten in eine Vorrichtung mit angepasster Größe so eingesetzt sind, dass die Abdichtzonen der Platten oder Schichten dichtend aufeinandergepresst werden. Der gesamte Mikroreaktor wird von einem einzigen Folienstapel gebildet. Die einzelnen Folien weisen auf ihrer jeweiligen Oberfläche Strukturelemente auf, welche die Reaktionsräume bilden, d. h. ein Reaktionsraum wird jeweils zwischen zwei übereinander liegenden Folienelementen gebildet. Jedes Folienelement weist Öffnungen für den Fluidfluss in den Reaktionsraum zwischen den darüber oder darunter liegenden Folien auf. Die einzelnen Folien werden in einem Gehäuse übereinander gestapelt und von oben mit einem Deckel verschlossen.

Die Aufgabe der vorliegenden Erfindung bestand daher darin, die vorgenannten Nachteile des Standes der Technik zu überwinden und ein variables, einfach zu handhabendes Mikroreaktionssystem bereitzustellen.

Diese Aufgabe wird durch ein modulares Mikroreaktionssystem der eingangs genannten Art gelöst, das dadurch gekennzeichnet ist, daß die Grundmodule, welche einen Folienstapel aufweisen, jeweils wenigstens ein im wesentlichen senkrecht zur Folienebene angeordnetes Rahmenelement haben, welches fest oder lösbar und fluiddicht mit dem Folienstapel verbunden ist, und die Folienstapel zusammen mit dem damit verbundenen Rahmenelement als Einheit in das Gehäuse einsetzbar und aus diesem herausnehmbar sind.

Die Innenwände des Gehäuses sind nicht mit speziellen Ausnehmungen für die einzelnen Grundmodule versehen, sondem im wesentlichen glatt oder sie weisen eine Rasterung zur Positionierung der Rahmenelemente auf. Eine solche Rasterung kann durch regelmäßig beabstandete Vorsprünge oder Vertiefungen an der Gehäuseinnenwand realisiert sein. In Längsrichtung des Gehäuses können die Grundmodule in beliebiger Anzahl und beliebiger Reihenfolge nach Art eines Baukastensystems eingesetzt werden. Die Anzahl der einsetzbaren Grundmodule ist lediglich durch die Gesamtlänge des Gehäuses begrenzt. Je nach Bedarf können in dem gleichen Gehäuse beispielsweise Module, die eine Reaktionsstrecke enthalten, in verschiedenen Längen verwendet werden. Auf diese Weise lassen sich zum Beispiel unterschiedliche Verweilzeiten in der Reaktionsstrecke in ein und demselben Gehäuse eines Mikroreaktionssystems realisieren.

Zweckmäßigerweise entspricht der äußere Umfang der Rahmenelemente dem Innenquerschnitt des Gehäuses und liegt fluiddicht an der Gehäuseinnenwand an. Da auch die Folienstapel fluiddicht mit den Rahmenelementen verbunden sind, wird dadurch eine Abdichtung gegen ein Vorbeiströmen von Fluid an dem Folienstapel eines Grundmoduls erreicht. Zusätzlich kann zwischen dem Rahmenumfang und der Gehäuseinnenwand noch ein Dichtungsmaterial vorgesehen sein, wie beispielsweise eine Graphitfoliendichtung oder ein eingeschobenes Dichtelement.

"Folie" bedeutet im Zusammenhang dieser Erfindung ein plattenartiges Element, das üblicherweise eine im wesentlichen rechteckige Form hat. Die für die vorliegende Erfindung verwendeten Folien oder plattenartigen Elemente bestehen vorzugsweise aus Metall, Metallegierungen oder Edelstahl, wobei je nach Anwendung und Bestimmung auch Folien aus Silizium oder Siliziumnitrid (SiNₓ) geeignet sind. Letztere finden insbesondere Anwendung als Basis für Widerstandsheizelemente und Sensoren. Als Metalle bzw. Metallegierungen sind Gold, Silber, Kupfer, Nickel, Nickel-Kobalt-Legierungen und Nickel-Eisen-Legierungen besonders bevorzugt. Als Folienmaterialien eignen sich auch Keramik und Kunststoffe, wie Polytetrafluorethylen (PTFE), Polyetheretherketone (PEEK) oder Cycloolefincopolymere (COC). Die Folien haben eine Dicke von etwa 0,05 mm bis zu einigen Millimetern.

Die Verbindung der übereinander gestapelten Folien miteinander bzw. die Verbindung zwischen Rahmen und Folienstapel erfolgt zweckmäßigerweise durch Schweißen oder Löten, vorzugsweise Laserschweißen, Laserlöten, Elektronenstrahlschweißen, Mikrodiffusionsschweißen, oder durch Kleben oder Fügen über keramische Zwischenschichten, wie beispielsweise keramische Grünfolien. Die Folien werden in einem Folienstapel derart miteinander verbunden, daß Fluid nur durch die dafür vorgesehenen Kanäle strömen und nicht an unerwünschten Stellen zwischen zwei Folien heraustreten kann. Eine fluiddichte Verbindung kann auch durch festes Aufeinanderpressen der Folien erreicht werden. Die Mikrostrukturierung der Folien, insbesondere das Aufbringen von Kanälen auf deren Oberflächen erfolgt durch Ätzen, Fräsen oder Funkenerosion. Besonders geeignete Verfahren sind LIGA oder Laser-LIGA. Folien aus Polymermaterialien werden vorzugsweise durch Abformverfahren hergestellt.

"Kanäle" oder "Mikrokanäle" bedeuten im Zusammenhang mit dieser Erfindung nutenförmige Vertiefungen in einer oder beiden Oberflächen einer Folie. Die Breite solcher Kanäle liegt im Bereich von 1 bis 1000 µm, vorzugsweise 5 bis 500 µm. Üblicherweise ist eine Vielzahl von Kanälen nebeneinander, häufig parallel, in einigen Fällen aber auch anders verlaufend angeordnet. Das Aspektverhältnis bezeichnet das Verhältnis der Tiefe eines Kanals zu seiner Breite. Üblicherweise ist das Aspektverhältnis der Mikrokanäle 1 oder kleiner.

Die Bezeichnungen "vor" bzw. "hinter" einem Grundmodul, einem Folienstapel usw. bezeichnen eine relative Position in Bezug auf die Längsachse des Gehäuses, wobei vorne die Seite des Fluideinlasses und hinten die Seite des Fluidauslasses ist.

Besonders bevorzugt ist es, wenn Grundmodule mit Folienstapel wenigstens zwei Rahmenelemente aufweisen, die an gegenüberliegenden Seiten des Folienstapels angeordnet sind. Je weiter die Rahmenelemente am Ende eines Folienstapels angeordnet sind, desto geringer ist der Totraum zwischen Gehäusewand und Folienstapel, in den Fluid einströmen kann. Bei einer erfindungsgemäß besonders bevorzugten Ausführungsform ist der äußere Umfang der Rahmenelemente wenigstens teilweise, vorzugsweise über den gesamten Umfang, größer als der Umfang des Folienstapels. Die Rahmenelemente fungieren bei dieser Ausführungsform zusätzlich als Abstandshalter, so daß der Folienstapel nur teilweise oder gar keine Berührung mit der Gehäusewand hat. Dadurch wird eine gute thermische und elektrische Isolierung des Foliestapels gegenüber der Gehäusewand gewährleistet. Häufig ist es zweckmäßig, zwei Grundmodule bei sehr unterschiedlichen Temperaturen zu verwenden. Beispielsweise werden Reaktionen in dem die Reaktionsstrecke enthaltenden Grundmodul oft bei sehr hohen Temperaturen durchgeführt, und anschließend sollen die Reaktionsprodukte in einem nachfolgenden Bereich des Reaktionssystems stark abgekühlt werden, insbesondere wenn die Reaktionsprodukte thermisch instabil sind. Berühren die Folienstapel der Grundmodule die Gehäusewand, welche beide üblicherweise aus Metall hergestellt und thermisch gut leitfähig sind, so erfolgt ein starker Wärmeaustausch zwischen den Modulen über die Gehäusewand. Der durch die Ausgestaltung der Rahmenelemente gewährleistete Abstand zwischen Folienstapein und Gehäusewand verringert einen solchen Wärmeaustausch in erheblichem Maße. Es ist daher auch besonders zweckmäßig, wenn die Rahmenelemente aus einem wärmeisolierenden Material hergestellt sind. Besonders geeignet sind hierfür keramische Materialien.

Besonders bevorzugt ist es, wenn zwei Rahmenelemente zweier in dem Gehäuse hintereinander angeordneter Grundmodule aneinander anliegen und dabei einen Hohlraum bilden, der von vier Seiten von den Innenflächen der Rahmenöffnungen und von zwei Seiten von jeweils einer Seite der mit dem Rahmen verbundenen Folienstapel begrenzt ist. Ein solcher Hohlraum kann beispielsweise zur Vermischung von mehreren Fluiden zwischen zwei Grundmodulen dienen, wenn mehrere Fluide gleichzeitig durch ein Grundmodul strömen, wie es bei Mischermodulen der Fall ist. Ein solcher Hohlraum wird nachfolgend auch als Diffusionsstrecke bezeichnet. Das Volumen eines solchen Hohlraums bzw. einer solchen Diffusionsstrecke wird durch die Größe der Rahmenöffnung und die Tiefe der Rahmenöffnung bis zu dem daran befestigten Folienstapel bestimmt. Wird der Rahmen zumindest teilweise über einen Folienstapel geschoben bzw. ist ein Folienstapel in die Rahmenöffnung eingesetzt, so ist die Größe der Rahmenöffnung in diesem Bereich durch den äußeren Umfang des Folienstapels vorgeben. Zur Verkleinerung des Hohlraums bzw. der Diffusionsstrecke ist es daher zweckmäßig, wenn sich der Umfang der Rahmenöffnung von dem Bereich, in den der Folienstapel eingesetzt ist, zu dem Bereich, der mit dem Rahmenelement des nächsten Grundmoduls in Berührung ist, verkleinert oder verjüngt. Zweckmäßigerweise erfolgt dies durch eine abgestufte Verkleinerung der Rahmenöffnung. Der Folienstapel, sitzt dann in dem Bereich der Rahmenöffnung mit dem größeren Innenumfang und liegt dabei frontseitig an der Abstufung in der Rahmenöffnung an. Durch die zusätzliche Anlagefläche wird weiterhin eine verbesserte Fluidabdichtung zwischen Rahmenelement und Folienstapel erzielt.

Häufig ist es erforderlich, den Druck und/ oder die Temperatur eines durch das System strömendes Fluides vor oder hinter einem Grundmodul zu bestimmen, um diese Parameter entweder nur zu erfassen oder auch zu regeln. Bei einer bevorzugten Ausführungsform der Erfindung weisen die Rahmenelemente hierfür Drucksensoren und/ oder Temperatursensoren auf. Druck- und Temperatursensoren können durch Bohrungen in dem Rahmen in den Bereich der Rahmenöffnung hineingeführt sein.

Die funktionalen Grundmodule des erfindungsgemäßen Mikroreaktionssystems sind dafür ausgelegt, verschiedene Aufgaben auszuführen. Darüber hinaus enthalten die einzelnen Grundmodule in den Folienstapeln ebenfalls verschiede funktionale Elemente, die in einem Grundmodul unterschiedliche Funktionen erfüllen. Die Funktion der einzelnen Unterelemente in einem Folienstapel wird durch den Aufbau der einzelnen Folien bestimmt, wie Mikrostrukturierung und Aufbau von zusätzlichen funktionalen Bauteilen, z.B. Widerstandsheizelemente oder Sensoren. Die Funktionen, die ein einzelnes Grundmodul erfüllt, werden durch Auswahl und Schichtfolge der verschiedenen Folien bzw. funktionalen Unterelemente erreicht und können individuell bestimmten Anforderungen angepaßt werden. Es kann auch ein Vielzahl unterschiedlichster funktionaler Grundmodule handelsüblich bereitgestellt werden, so daß sich der Verbraucher das Mikroreaktionssystem nach seinen Bedürfnissen aus einer großen Auswahl an Einzelelementen zusammenstellen kann. Er benötigt lediglich ein Gehäuse und kombiniert dieses nach seinen Anforderungen mit den benötigten funktionalen Grundmodulen. Das erfindungsgemäße Mikroreaktionssystem bietet damit ein Höchstmaß an Variabilität und spart erhebliche Kosten ein, da nicht für jede Anforderung ein eigenes vollständiges System erforderlich ist.

Nachfolgend sind einige erfindungsgemäß besonders zweckmäßige funktionale Unterelemente für einen Folienstapel in einem Grundmodul beschrieben. Diese können jeweils als einzige oder kombiniert mit anderen funktionalen Elementen in beliebiger Schichtfolge in einem Folienstapel enthalten sein. So ist es beispielsweise für ein Mischermodul, eine Reaktionsstrecke oder auch ein reines Kühl- oder Heizmodul zweckmäßig, daß eine oder mehrere der Folien in dem Folienstapel als Fluidleitungselemente ausgebildet sind, die auf ihrer Oberfläche Kanäle aufweisen, welche so angeordnet sind, daß sie ein Fluid, welches von einem Fluideinlaß oder von einem benachbarten Grundmodul anströmt, von der angeströmten Seite des Folienstapels durch die Kanäle hindurch zur gegenüberliegenden Seite und aus dieser heraus leiten. Für die Kühlung oder Erwärmung der durch ein Fluidleitungselement strömenden Fluide ist es auch zweckmäßig, wenn eine oder mehrere der Folien in dem Folienstapel als Wärmeübertragerelemente ausgebildet sind, die auf ihrer Oberfläche Kanäle und wenigstens eine Einlaßöffnung und eine Auslaßöffnung für ein Kühl- oder Heizfluid aufweisen, wobei die fluidführenden Bereiche der Wärmeübertragerelemente gegenüber den fluidführenden Bereichen der Fluidleitungselemente gegen ein Übertreten von Fluid abgedichtet sind. Zweckmäßigerweise sind solche Wärmeübertragerelemente unmittelbar über und/ oder unter Fluidleitungselementen in dem Folienstapel angeordnet. Zur Erwärmung des durch ein Modul strömenden Fluids können auch andere Heizvorrichtungen auf den Folien angebracht sein, wie z. B. elektrische Widerstandsheizelemente oder ähnliches. Sollen Temperatur oder Druck im Inneren eines Grundmoduls gemessen oder reguliert werden, so können hierfür Folien mit entsprechenden Sensorelementen vorgesehen sein. Als Temperatursensoren eignen sich elektrische Widerstandselemente und Thermoelemente, es sind aber auch faseroptische Temperaturmeßelemente und Membraninfrarotsensoren für derartige mikrotechnischen Anwendungen bekannt und geeignet. Weiterhin können in einem Folienstapel Massenflußsensoren untergebracht sein, welche die Menge an durchströmendem Fluid erfassen und/ oder regulieren. Bekannte mikrotechnische Massenflußsensoren basieren darauf, daß zwischen zwei Temperatursensoren im Fluidstrom ein elektrisches Widerstandsheizelement angeordnet ist, welches das von dem ersten Temperatursensor anströmende Fluid erwärmt und die Temperatur des Fluides stromabwärts von dem zweiten Temperatursensor gemessen wird. Ein Vergleich der beiden gemessenen Temperaturen liefert ein Maß für die Strömungsgeschwindigkeit, welche unter Berücksichtigung des Kanalquerschnitts ein Maß für den Massenfluß liefert.

Bei einer weiteren bevorzugten Ausführungsform der Erfindung sind an den Fluidein- und/ oder -auslässen des Gehäuses Massenflußregler angeordnet. Die Massenflußregler bestehen aus einem Massenflußsensor und einem Ventil zur Steuerung des Massenflusses sowie entsprechender Regelungs- bzw. Stellelektronik. Aufgrund der größeren Dimensionen an den Fluidein- und -auslässen als dies innerhalb der Folienstapel der Grundmodule der Fall ist, können hier miniaturisierte Massenflußsensoren eingesetzt werden.

Für die Durchführung von Reaktionen mit mehreren Eduktfluiden, oder wenn ein oder mehrere Eduktfluide mit einem Inertfluid als Träger oder zur Verdünnung gemischt werden sollen, ist es zweckmäßig, wenn wenigstens ein Grundmodul in dem Reaktionssystem als Fluidmischer ausgebildet ist, welcher im Folienstapel Kanäle aufweist, die von einem Fluideinlaß des Gehäuses zu einer Mischkammer führen, welche vorzugsweise ein Hohlraum bzw. eine Diffusionstrecke zwischen dem Fluidmischer und einem darauf folgend in dem Gehäuse angeordneten Grundmodul ist. Zum Mischen mehrerer Fluide, die von verschiedenen Fluideinlässen in das System einströmen, können mehrere als Fluidmischer ausgebildete Grundmodule hintereinander angeordnet sein. Ein Fluidmischer kann aber auch so aufgebaut sein, daß gleichzeitig drei oder mehr Fluide in diesen Fluidmischer einströmen können und in die Mischkammer geleitet werden.

Ein als Reaktionsstrecke ausgebildetes Grundmodul weist im Folienstapel Kanäle auf, die von einem vor der Reaktionsstrecke in dem Gehäuse angeordneten Grundmodul zu einem dahinter angeordneten Grundmodul, zu einer Kammer oder zu einem Fluidauslaß führen. Eine besonders bevorzugte Anwendung des erfindungsgemäßen Mikroreaktionssystems ist die Untersuchung und Durchführung heterogen katalysierter Gasphasenreaktionen. Hierfür sind die Kanäle der Reaktionsstrecke vorzugsweise mit einem Katalysator und gegebenenfalls mit einer den Katalysator enthaltenden Trägerbeschichtung versehen. Als Katalysatoren eignen sich Edelmetalle, insbesondere Platin. Die Kanäle der Reaktionsstrecke sind hierfür zweckmäßigerweise mit dem Katalysatormaterial beschichtet. Alternativ können die Folien auch vollständig aus dem Katalysatormetall hergestellt sein. Eine Trägerschicht zwischen Kanaloberfläche und Katalysator eignet sich zur Haftvermittlung zwischen Katalysator und Folienmaterial und/ oder auch zur Vergrößerung der katalytischen Oberfläche. Als Trägerschicht eignet sich insbesondere Aluminiumoxid (Al₂O₃), jedoch ist auch eine Vielzahl anderer Trägermaterialien aus dem Stand der Technik bekannt, die erfindungsgemäß eingesetzt werden können.

Ein erfindungsgemäß besonders bevorzugter Schichtaufbau eines Folienstapels für eine Reaktionsstrecke weist a) alternierend Wärmeübertragerelemente und Fluidleitungselemente, b) alternierend Wärmeübertragerelemente, Fluidleitungselemente und Sensorelemente oder c) alternierend Wärmeübertragerelemente, Fluidleitungselemente und kombinierte Sensor-/ Heizelemente auf.

Elektrische Widerstandsheizelemente können als Draht oder als dünne Metallschichten auf den Folien aufgebracht sein. Als Temperatursensoren eignen sich in ähnlicher Weise aufgebaute Widerstandselemente oder Thermoelemente, es sind jedoch auch faseroptische Temperatursensoren in mikrotechnischer Ausgestaltung bekannt.

Das Gehäuse des erfindungsgemäßen Mikroreaktionssystems ist zweckmäßigerweise im wesentlichen kastenförmig mit einem Gehäuseunterteil und einem Gehäusedeckel ausgebildet. Nach dem Einsetzen der Grundmodule in das Gehäuseunterteil wird das Gehäuse mit dem Dekkel fest verschlossen, so daß die Rahmenelemente der Grundmodule in gleicher Weise, wie im Innenraum des Gehäuseunterteils, paßgenauen und fluiddichten Kontakt zu dem Gehäusedekkel haben. Zur Befestigung kann der Gehäusedeckel mit dem Unterteil verschraubt oder anderweitig angedrückt werden. Vorzugsweise ist das Gehäuse im wesentlichen aus Metall gefertigt, jedoch eignet sich auch Keramik, insbesondere wenn thermische und/ oder elektrische Isolierung gefordert ist.

Für die Zuführung von Heiz- oder Kühlfluid sowie für elektrische Zu- und Ableitungen für elektrische Heizelemente und Sensoren weist das Gehäuse in der Gehäusewand entsprechende Anschlüsse auf. Vorzugsweise sind diese Anschlüsse als eine sich über einen Teil oder die gesamte Länge des Gehäuses erstreckende Anschlußleiste mit einer Vielzahl nebeneinander angeordneter Anschlüsse ausgebildet, die je nach Bedarf und den dahinter im Gehäuse angeordneten Grundmodulen verwendet werden können. Es können jedoch auch mehrere Anschlußleisten an der Gehäusewand vorgesehen sein, z. B. eine Anschlußleiste für elektrische Kontakte und eine weitere Anschlußleiste mit Zu- und Ableitungen für Wärmeübertragerelemente.

Weitere Vorteile, Merkmale und Ausführungsformen der Erfindung werden deutlich anhand der nachfolgenden Beschreibung einiger bevorzugter Ausführungsbeispiele und der dazugehörigen Figuren.
- Fig. 1: zeigt ein schematisches Diagramm der Anordnung verschiedener Elemente eines erfindungsgemäßen Mikroreaktionssystems.
- Fig. 2: zeigt einen Längsschnitt durch ein erfindungsgemäßes Mikroreaktionssystem.
- Fig. 3: zeigt eine weitere Ausführungsform des erfindungsgemäßen Mikroreaktionssystems schräg von vorne.
- Fig. 4: zeigt ein erfindungsgemäßes Rahmenelement mit Sensoren.
- Fig. 5: zeigt ein erfindungsgemäßes Grundmodul mit Folienstapel und Rahmenelementen.
- Fig. 6a, 6b und 6c: zeigen ein Heizelement, ein Fluidleitungselement und ein Wärmeübertragerelement.
- Fig. 7a, 7b und 7c: zeigen ein Wärmeübertragerelement, ein Eduktzuführungselement und ein Fluidleitungselement in alternativen Ausführungsformen.

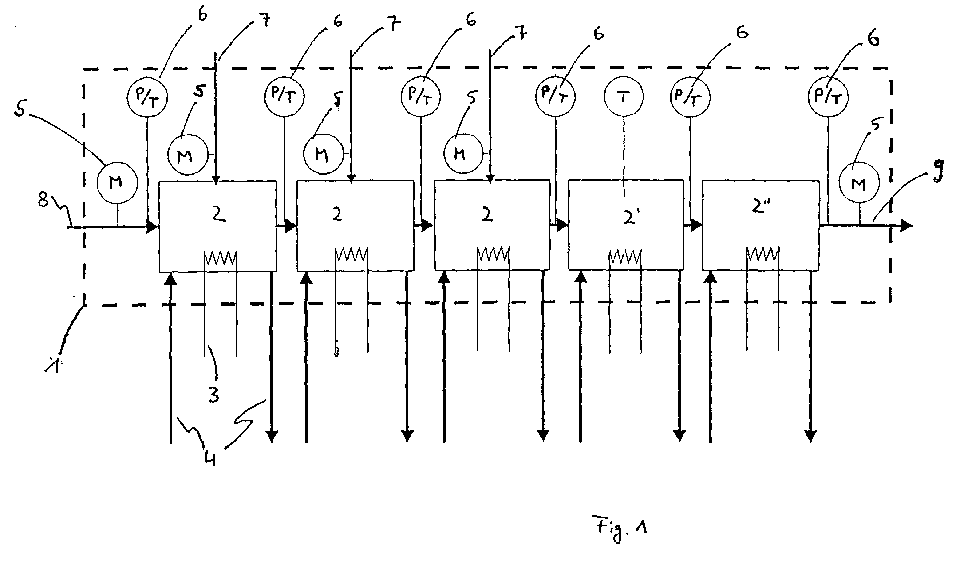

Figur 1 gibt die Anordnung der einzelnen Elemente eines erfindungsgemäßen Mikroreaktionssystems schematisch wieder. Das durch eine unterbrochene Linie dargestellte Gehäuse 1 weist drei Eduktgaseinlässe 7, einen Inertgaseinlaß 8 und einen Produktgasauslaß 9 auf. Im Gehäuseinnenraum sind hintereinander funktionale Grundmodule 2, 2' und 2" angeordnet, nämlich Mischermodule 2, eine Reaktionsstrecke 2' und ein Quenchmodul (Kühl- oder Heizmodul) 2". An den Ein- und Auslässen 7, 8 und 9 des Gehäuses 1 sind jeweils Massenflußregler 5 vorgesehen, die den Gasstrom messen und durch Ansteuerung von Ventilen regeln. Des weiteren sind vor und hinter den einzelnen Grundmodulen 2, 2' und 2" Druck- und Temperatursensoren 6 vorgesehen, die der Erfassung und/ oder Regelung dieser Parameter dienen. Jedes der dargestellten Grundmodule 2, 2' und 2" ist mit Wärmeübertragerelementen ausgestattet, die über Zu- und Abläufe 4 mit Kühl- oder Heizfluid (Gas oder Flüssigkeit) versorgt werden können, um die Temperatur in den Grundmodulen einzustellen. Weiterhin ist jedes der dargestellten Grundmodule 2, 2' und 2" mit elektrischen Widerstandsheizelementen 3 ausgestattet.

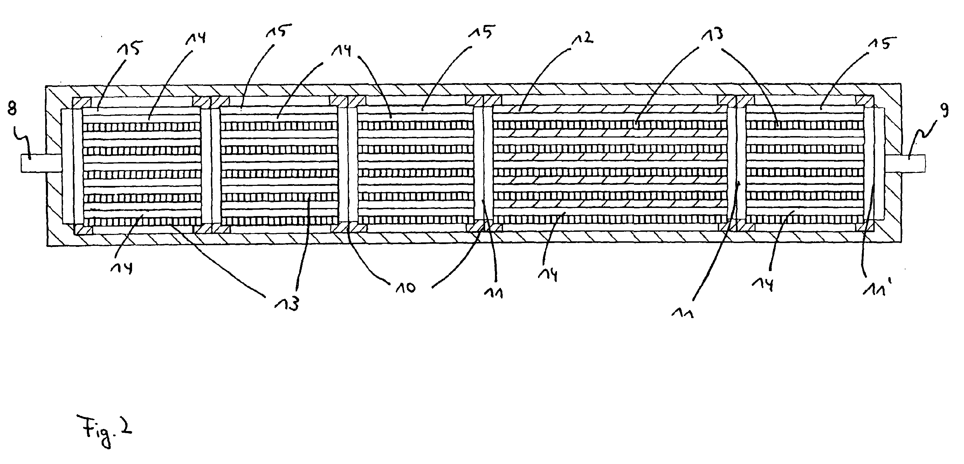

Figur 2 zeigt eine konkrete erfindungsgemäße Ausgestaltung des in Figur 1 dargestellten modularen Mikroreaktionssystems im Längsschnitt von der Seite. Die in Figur 1 dargestellten Fluideinlässe 7 befinden sich bei der in Figur 2 dargestellten Ausführungsform auf der vom Betrachter abgewandten Seite des Gehäuses 1 und sind daher in Figur 2 nicht sichtbar. In dem Gehäuse 1 in Figur 2 sind, wie in Figur 1, fünf Grundmodule untergebracht, nämlich in Richtung vom Fluideinlaß 8 zum Fluidauslaß 9 drei aufeinanderfolgende Mischermodule 2, eine Reaktionsstrecke 2' und ein Quenchmodul 2". Jedes der Grundmodule besteht aus einem Folienstapel mit plattenförmigen, übereinander angeordneten Folien 12, 13, 14, 15 und zwei Rahmenelementen 10, die an Vorder- und Rückseite (bezogen auf die Hauptfluidströmungsrichtung) mit dem Folienstapel verbunden sind. Der äußere Umfang der Rahmenelemente 10 entspricht dem Innenquerschnitt des Gehäuses 1, so daß die Rahmenelemente paßgenau und im wesentlichen fluiddicht an der Gehäuseinnenwand anliegen. Die Rahmenelemente 10 sind so ausgestaltet, daß sie den damit verbundenen Folienstapel mit einem Bereich der Rahmenöffnung umschließen, sich aber auch in der Hauptfluidströmungsrichtung bis vor den Folienstapel erstrecken. Dabei ist die Innenquerschnittsfläche der Rahmenöffnung vor einem Folienstapel kleiner als in dem den Folienstapel umschließenden Bereich, wobei der Übergang vom größeren zum kleineren Innenquerschnitt über eine Abstufung verläuft. Zwei benachbarte Grundmodule sind derart nebeneinander angeordnet, daß die Frontflächen ihrer Rahmenelemente aufeinander zu liegen kommen, wobei zwischen benachbarten Grundmodulen ein Hohlraum bzw. eine Diffusionsstrecke 11 entsteht. Die Mischermodule 2 der in Figur 2 dargestellten Ausführungsform weisen jeweils 3 verschiedene Arten von Folien in aufeinanderfolgender Schichtung auf, nämlich Wärmeübertragerelemente 13, Fluidleitungselemente 14 und Eduktfluidzuführungselemente 15. Die Eduktfluidzuführungselemente 15 führen ein durch den in Figur 2 nicht dargestellten und in Figur 1 mit der Bezugszahl 7 bezeichneten Edukteinlaß zu der Diffusionsstrecke 11 hinter dem entsprechenden Mischermodul 2. Die Fluidleitungselemente 14 führen ein weiteres Fluid, das durch den Fluideinlaß 8 eingeleitet wird, durch den Folienstapel hindurch ebenfalls zur Diffusionsstrecke 11. Die Wärmeübertragerelemente 13 können über nichtdargestellte Fluidzuläufe mit einem Heiz- oder Kühlfluid gespeist werden, um die durch das Mischermodul strömenden Fluide zu kühlen oder zu erwärmen. In der Diffusionsstrecke 11 vermischen sich die durch das Modul geleiteten Fluide, bevor sie in das nächste Grundmodul einströmen. Im zweiten und dritten Mischermodul können die über das erste Mischermodul eingeleiteten Fluide mit weiteren Eduktfluiden, wahlweise auch mit einem Inertfluid, gemischt werden.

Die Reaktionsstrecke 2' weist ebenfalls drei Arten von Folien auf, nämlich Wärmeübertragerelemente 13, Fluidleitungselemente 14 sowie Sensor-/Heizelemente 12. Die Fluidleitungselemente 14 der Reaktionsstrecke 2', welche die Diffusionsstrecken 11 vor und hinter der Reaktionsstrekke 2' miteinander verbinden, können wahlweise ein Katalysatormaterial enthalten. Die mit mikrostrukturierten Kanälen versehenen Folien 14 können dabei entweder vollständig aus dem Katalysatormaterial, wie Edelmetall, hergestellt sein, oder die mikrostrukturierten Kanäle sind mit dem Katalysatormaterial beschichtet. Die Wärmeübertragerelemente 13 sind in der gleichen Weise ausgestaltet wie bei den Mischermodulen 2. Die Sensor- /Heizelemente 12 sind je nach Bedarf mit Temperatursensoren, elektrischen Widerstandsheizelementen oder beidem ausgestattet. Sie können auch mikrotechnische Drucksensoren enthalten. Das sich an die Reaktionsstrecke 2' anschließende Quenchmodul 2" ist im wesentlichen aufgebaut wie ein Mischermodul 2, nämlich aus Wärmeübertrageelementen 13, Fluidleitungselementen 14 und Fluidzuführungselementen 15, wobei die von der Reaktionsstrecke anströmenden Reaktionsprodukte durch die Fluidleitungselemente 14 in eine Kammer 11' unmittelbar vor dem Fluidauslaß 9 geführt werden. Durch die Fluidzuführungeselemente 15 in dem Quenchmodul 2" kann zusätzlich ein Quenchfluid zugeführt werden, das beispielsweise der schnellen Abkühlung, Verdünnung oder Stabilisierung der Reaktionsprodukte dienen kann. Quenchfluid und Reaktionsprodukte werden in der Kammer 11' zusammengeführt und mischen sich dort, bevor sie durch den Fluidauslaß 9 aus dem Gehäuse ausströmen.

Die verschiedenen Grundmodule 2, 2', 2" lassen sich einfach aus dem Gehäuse herausnehmen und gegen andere Grundmodule austauschen. Durch Austausch der Reaktionsstrecke 2' können beispielsweise unterschiedliche Katalysatoren oder andere Reaktionsbedingungen untersucht werden, ohne daß die übrigen Grundmodule ausgetauscht werden oder ein vollständig neues Reaktionssystem verwendet werden muß. Es können auch Grundmodule weggelassen werden, wie beispielsweise eines oder zwei der Mischermodule 2. Hierfür können andere der Grundmodule 2, 2' oder 2" in längerer Ausführungsform eingesetzt werden, um den zurückbleibenden Leerraum in dem Gehäuse 1 auszufüllen. Alternativ können zum Ausfüllen des Leerraumes auch andere Elemente, wie beispielsweise einfache Rahmenelemente 10 oder den Rahmenelementen ähnliche Abstandshalter eingesetzt werden.

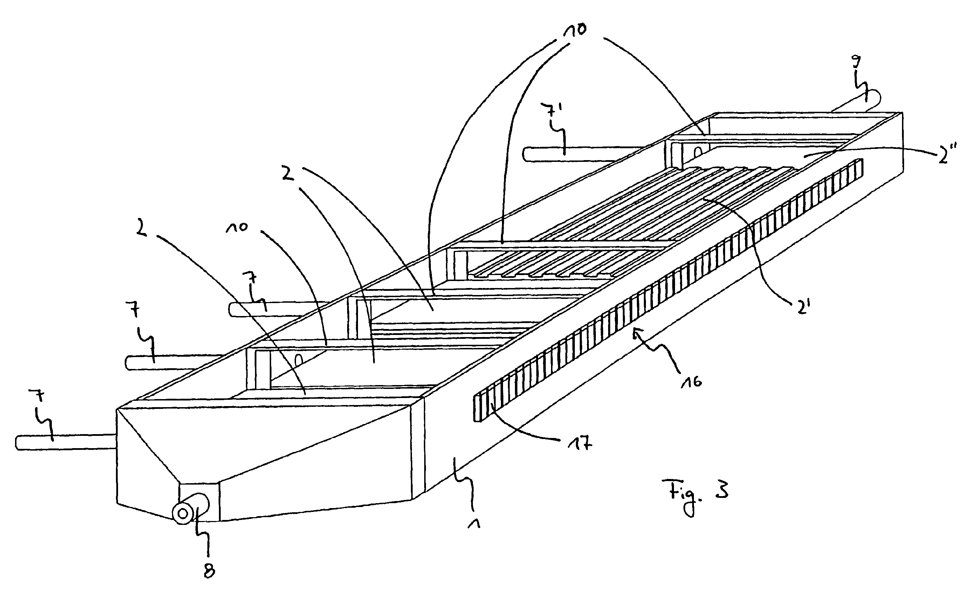

Figur 3 zeigt eine weitere Ausführungsform des erfindungsgemäßen Mikroreaktionssystems in perspektivischer Darstellung schräg von vorne. Das Mikroreaktionssystem weist im wesentlichen die gleichen Arten von Grundmodulen auf, wie die Ausführungsform gemäß Figur 2, nämlich Mischermodule 2, eine Reaktionsstrecke 2' und ein Quenchmodul 2". Im Bereich des Quenchmoduls 2" ist zusätzlich eine Fluidzuführung 7' zur Einleitung von Quenchfluid in das Quenchmodul 2" dargestellt. An der Seitenwand des Gehäuses 1 ist eine Anschlußleiste 16 mit einer Vielzahl von nebeneinander angeordneten Anschlüssen 17 vorgesehen. Über die Anschlüsse 17 können die dahinter angeordneten Grundmodule mit Strom, z. B. für elektrische Widerstandsheizelemente oder mit Fluid, z. B. für die Wärmeübertragerelemente, versorgt werden.

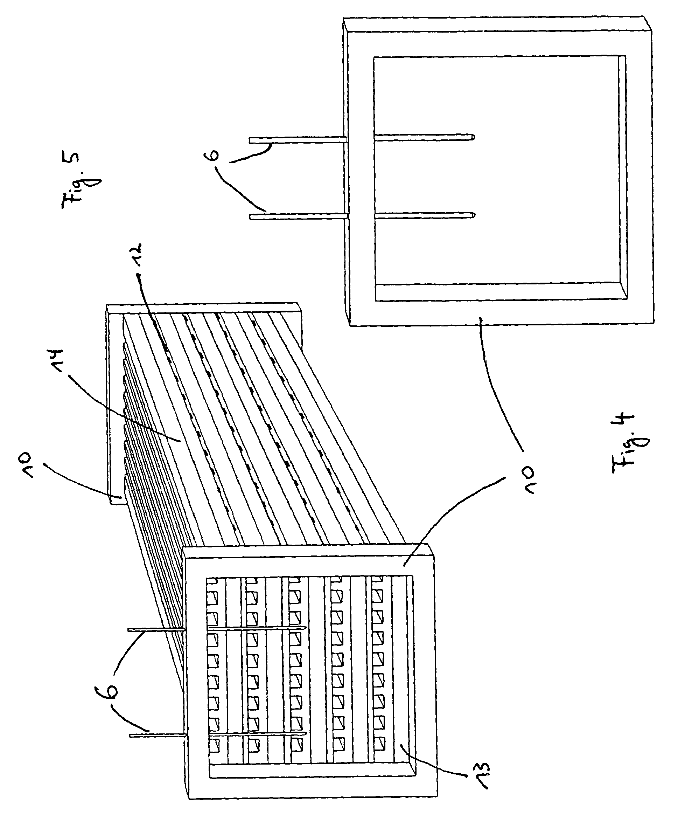

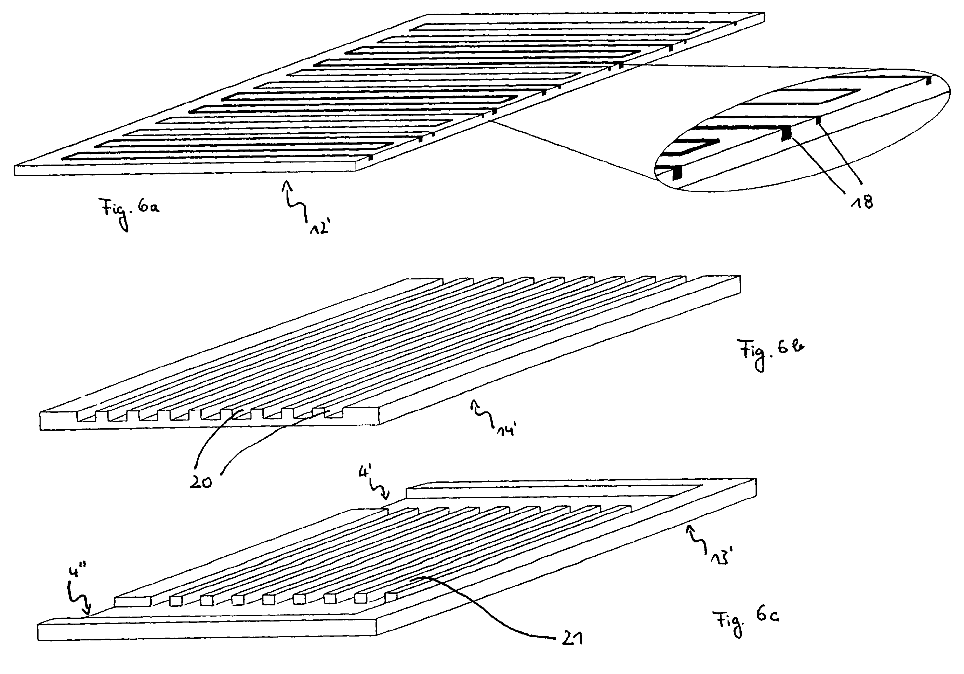

Figur 4 zeigt ein erfindungsgemäßes Rahmenelement 10, bei welchem Sensoren 6 durch Bohrungen in dem Rahmen in die Rahmenöffnung eingeführt sind. Die Sensoren 6 können Druckund/ oder Temperatursensoren sein. Figur 5 zeigt ein erfindungsgemäßes Grundmodul mit einem Folienstapel und an Vorder- und Rückseite des Folienstapels angeordneten Rahmenelementen 10 aus Figur 4. Der Folienstapel besteht aus Fluidleitungselementen 14 mit mikrostrukturierten Kanälen, die sich in einer Schar parallel und in gerader Linie von der Vorderseite zur Rückseite des Folienstapels erstrecken. Weiterhin umfaßt der Folienstapel Sensor-/Heizelemente 12 und Wärmeübertragerelemente 13. Das Grundmodul aus Figur 5 eignet sich als Reaktionsstrecke.

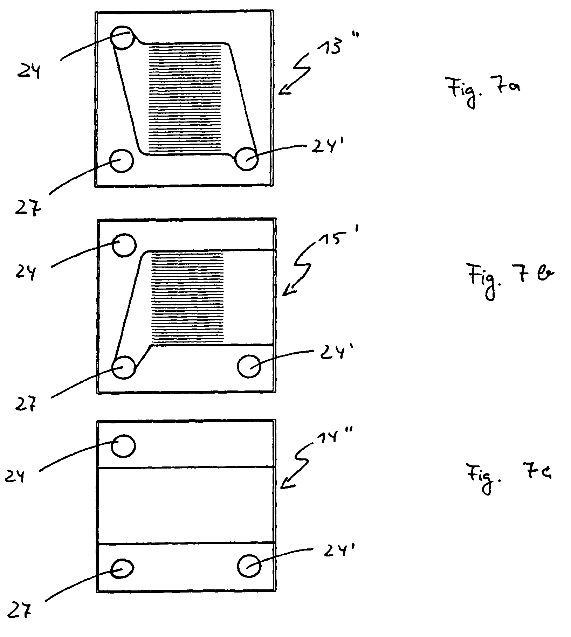

Die Figuren 6a, 6b und 6c zeigen ein Heizelement 12', ein Fluidleitungselement 14' und ein Wärmeübertragerelement 13', die für eine gemeinsame Anordnung in einem Folienstapel geeignet sind. Das Heizelement 12' aus Figur 6a besteht aus einer im wesentlichen rechteckigen Platte, deren Oberfläche von elektrischen Widerstandsheizdrähten durchzogen ist. Die Heizdrähte enden an einer der Seitenflächen des Heizelementes 12 in Anschlüssen 18, wo sie mit Strom gespeist werden. Vorzugsweise sind die Anschlüsse 18 als sogenannte Bond Pads ausgebildet.

Das Fluidleitungselement 14' aus Figur 6b ist mit einer Schar von parallel verlaufenden, nutenförmigen Mikrokanälen 20 versehen, die sich von einer Seite des Fluidleitungselementes zur gegenüberliegenden Seite erstrecken. Durch die in einem Folienstapel über dem Fluidleitungselement angeordnete Folie werden die einzelnen nutenförmigen Kanäle von oben fluiddicht verschlossen, um ein Übertreten von Fluid in einen benachbarten Kanal oder seitlich aus dem Folienstapel heraus zu verhindern. Bei dem in Figur 6c dargestellten Wärmeübertragerelement 13' wird ein Kühl- oder Heizfluid durch einen Zulauf 4' eingeführt, durch mikrostrukturierte Wärmeübertragerkanäle 21 durch das Wärmeübertragerelement 13' geleitet und durch einen Ablauf 4" wieder abgeführt.

Die Figuren 7a, 7b und 7c zeigen alternative Ausgestaltungen von mikrostrukturierten Folienelementen, nämlich ein Wärmeübertragerelement 13", ein Fluidzuführungselement 15' und ein Fluidleitungselement 14", die sich für eine gemeinsame Anordnung in einem Folienstapel eignen. Die Folienelemente 13", 15' und 14" sind mit jeweils 3 Bohrungen versehen, die in einem Folienstapel übereinander zu liegen kommen und sich von oben nach unten durch den Folienstapel erstrecken. Die Bohrungen 24 und 24' dienen als Zu- bzw. Ablauf für Wärmeübertrager und stehen nur mit dem mikrostrukturierten Bereich des Wärmeübertragerelementes 13" in Verbindung, nicht jedoch mit den mikrostrukturierten Bereichen der Fluidzuführungselemente 15' und der Fluidleitungselemente 14". Die Folienelemente der Figuren 7a, 7b und 7c sind für eine Fluidzuführung von oben in einen Folienstapel vorgesehen. Kühl- oder Heizfluid wird durch den Wärmeübertragerzulauf 24 eingeleitet, durchströmt ausschließlich eines oder mehrere der in dem Folienstapel vorgesehenen Wärmeübertragerelemente 13" und verläßt den Folienstapel durch den Wärmeübertragerablauf 24'. Eduktfluid wird durch die Fluidzuführungsbohrung 27 in den Folienstapel eingeleitet, strömt durch diese Bohrung in die jeweiligen Fluidzuführungselemente 15 in einem Stapel und verläßt den Stapel in Richtung des nächsten benachbarten Grundmoduls. Das Fluidleitungselement 14" wird von der in Figur 7c linken Seite angeströmt und das Fluid zur rechten Seite hindurchgeleitet, wo es sich in einer anschließenden Diffusionsstrecke mit dem aus dem Fluidzuführungselement 15' austretenden Fluid mischen kann.

### Bezugszeichenliste

- 1: Gehäuse
- 2: Mischermodul
- 2': Reaktionsstrecke
- 2": Quenchmodul
- 3: Heizdraht
- 4, 4', 4": Wärmeübertragerzu-/-ablauf
- 5: Massenflußregler
- 6: Druck-/ Temperatursensoren
- 7, 7', 7": Eduktfluidzuführungen
- 8: Inertfluidzuführung
- 9: Fluidauslaß
- 10: Rahmenelement
- 11: Diffusionsstrecke
- 12, 12', 12": Sensor-/ Heizelement
- 13, 13', 13": Wärmerübertragerelement
- 14, 14', 14": Fluidleitungselement
- 15, 15': Fluidzuführungselement
- 16: Anschlußleiste
- 17: Anschlüsse
- 18: Heizelementanschlüsse
- 20: Reaktionskanäle
- 21: Wärmeübertragerkanäle
- 22: Sammler
- 24, 24': Wärmerübertragerzu-/ -ablaufbohrungen
- 27: Eduktfluidzuführungsbohrung

## Patentansprüche

1. Modulares Mikroreaktionssystem mit einem Gehäuse und darin untergebrachten funktionalen Grundmodulen, wobei das Gehäuse wenigstens einen Fluideinlaß und wenigstens einen Fluidauslaß hat, die Grundmodule in dem Gehäuse in Reihe hintereinander angeordnet und so ausgebildet sind, daß sie aufeinanderfolgend von Fluid durchströmbar sind und wenigstens einige der Grundmodule aus mehreren fest oder lösbar miteinander verbundenen, plattenartigen, im wesentlichen rechteckigen, übereinandergeschichteten Folien unter Ausbildung eines Folienstapels aufgebaut sind, wobei eine oder mehrere der Folien auf einer oder beiden Oberflächen mikrostrukturierte Kanäle, Sensorelemente, Heizelemente oder Kombinationen davon aufweisen und jeder Folienstapel wenigstens eine Folie aufweist, die auf ihrer Oberfläche mit Kanälen versehen ist, welche so ausgebildet sind, daß sie für eine Fluidleitung von einer Seite des Folienstapels zur gegenüberliegenden oder zu einer daran angrenzenden Seite des Folienstapels führen, **dadurch gekennzeichnet, daß** die Grundmodule (2, 2', 2") jeweils wenigstens ein im wesentlichen senkrecht zur Folienebene angeordnetes Rahmenelement (10) haben, welches fest oder lösbar und fluiddicht mit dem Folienstapel verbunden ist, und die Folienstapel zusammen mit den Rahmenelementen als Einheit in das Gehäuse (1) einsetzbar und aus diesem herausnehmbar sind.

2. System nach Anspruch 1, **dadurch gekennzeichnet, daß** der äußere Umfang der Rahmenelemente (10) dem Innenquerschnitt des Gehäuses (1) entspricht und fluiddicht an der Gehäuseinnenwand anliegt.

3. System nach einem der Ansprüche 1 oder 2, **dadurch gekennzeichnet, daß** ein Grundmodul (2, 2', 2") wenigstens zwei Rahmenelemente (10) aufweist, die an gegenüberliegenden Seiten eines Folienstapels angeordnet sind.

4. System nach einem der Ansprüche 1 bis 3, **dadurch gekennzeichnet, daß** der äußere Umfang der Rahmenelemente (10) und der Innenquerschnitt des Gehäuses (1) rechteckig sind.

5. System nach einem der Ansprüche 1 bis 4, **dadurch gekennzeichnet, daß** der äußere Umfang der Rahmenelemente (10) wenigstens teilweise, vorzugsweise über den gesamten Umfang, größer ist als der Umfang des Folienstapels in Richtung der Längsachse des Gehäuses.

6. System nach einem der Ansprüche 1 bis 5, **dadurch gekennzeichnet, daß** die Rahmenelemente (10) aus wärmeisolierendem Material vorzugsweise aus Keramik hergestellt sind.

7. System nach einem der Ansprüche 1 bis 6, **dadurch gekennzeichnet, daß** die benachbarten Rahmenelemente (10) zweier in dem Gehäuse (1) hintereinander angeordneter Grundmodule (2, 2', 2") aneinander anliegen und einen Hohlraum (11) bilden, der von vier Seiten von den Innenflächen der Rahmenöffnungen und von zwei Seiten von jeweils einer Seite der mit den Rahmen verbundenen Folienstapel begrenzt ist.

8. System nach einem der Ansprüche 1 bis 7, **dadurch gekennzeichnet, daß** die Rahmenelemente (10) in der Rahmenöffnung Drucksensoren und/ oder Temperatursensoren (6) aufweisen.

9. System nach einem der Ansprüche 1 bis 8, **dadurch gekennzeichnet, daß** eine oder mehrere der Folien in einem Folienstapel als Fluidleitungselemente ausgebildet sind, welche auf der Oberfläche Kanäle aufweisen, die von der von Fluid angeströmten Seite des Folienstapels durch diesen hindurch zur gegenüberliegenden Seite des Folienstapels führen,
und/oder
eine oder mehrere der Folien in einem Folienstapel als Wärmeübertragerelemente ausgebildet sind, die auf ihrer Oberfläche Kanäle und wenigstens eine Einlaßöffnung und eine Auslaßöffnung für ein Kühl- oder Heizfluid aufweisen, wobei die fluidführenden Bereiche der Wärmeübertragerelemte gegenüber den fluidführenden Bereichen der Fluidleitungselemente gegen ein Übertreten von Fluid abgedichtet sind,
und/ oder
eine oder mehrere der Folien in einem Folienstapel als Temperatur- und/ oder Drucksensorelemente, Heizelemente oder Kombination davon ausgebildet sind.

10. System nach einem der Ansprüche 1 bis 9, **dadurch gekennzeichnet, daß** wenigstens ein Grundmodul als Fluidmischer ausgebildet ist, welcher im Folienstapel Kanäle aufweist, die von einem Fluideinlaß des Gehäuses zu einer Mischkammer führen, welche vorzugsweise ein Hohlraum zwischen dem Fluidmischer und einem darauffolgend in dem Gehäuse angeordneten weiteren Grundmodul ist.

11. System nach Anspruch 10, **dadurch gekennzeichnet, daß** der Fluidmischer weiterhin Kanäle aufweist, die von einem weiteren Fluideinlaß des Gehäuses und/ oder von einem vor dem Fluidmischer in dem Gehäuse angeordneten Grundmodul zu der Mischkammer führen.

12. System nach einem der Ansprüche 1 bis 11, **dadurch gekennzeichnet, daß** wenigstens ein Grundmodul als Reaktionsstrecke ausgebildet ist, welche im Folienstapel Kanäle aufweist, die von einem vor der Reaktionsstrecke in dem Gehäuse angeordneten Grundmodul zu einem dahinter angeordneten Grundmodul oder zu einem Fluidauslaß führen.

13. System nach einem der Ansprüche 1 bis 12, **dadurch gekennzeichnet, daß** die Kanäle der Reaktionsstrecke mit einem Katalysator und vorzugsweise mit einer zwischen der Kanaloberfläche und dem Katalysator angeordneten Trägerbeschichtung versehen sind.

14. System nach einem der Ansprüche 1 bis 13, **dadurch gekennzeichnet, daß** das Gehäuse aus Metall oder Keramik hergestellt ist.

15. System nach einem der Ansprüche 1 bis 14, **dadurch gekennzeichnet, daß** an der Gehäusewand elektrische und/ oder Fluidanschlüsse (17) vorgesehen sind.

16. System nach Anspruch 15, **dadurch gekennzeichnet, daß** die an der Gehäusewand vorgesehenen Anschlüsse (17) als Anschlußleiste (16) ausgebildet ist, die sich vorzugsweise in Längsrichtung des Gehäuses (1) erstreckt.

## Claims

1. A modular microreaction system comprising a housing and functional base modules accommodated therein, the housing having at least one fluid inlet and at least one fluid outlet, the base modules being arranged one behind another in a row in the housing and being designed such that fluid can flow successively through them, and at least some of the base modules being constructed from a plurality of plate-like, substantially rectangular foils which are permanently or detachably connected to one another and are arranged in layers one above another, forming a foil stack, one or more of the foils having microstructured channels, sensor elements, heating elements or combinations thereof on one or both surfaces and each foil stack having at least one foil which is provided on its surface with channels which are constructed such that they lead from one side of the foil stack to the opposite side or to an adjacent side of the foil stack for a fluid passage, **characterized in that** the base modules (2, 2', 2") each have at least one frame element (10), which is arranged essentially perpendicular to the foil plane and which is connected permanently or detachably to the foil stack in a fluid-tight manner and the foil stacks, together with the frame elements, can be inserted into and removed from the housing (1) as a unit.

2. The system as claimed in claim 1, **characterized in that** the outer circumference of the frame elements (10) corresponds to the inner cross section of the housing (1) and rests in a fluid-tight manner on the housing inner wall.

3. The system as claimed in either of claims 1 and 2, **characterized in that** a base module (2, 2', 2") comprises at least two frame elements (10), which are arranged on opposite sides of a foil stack.

4. The system as claimed in one of claims 1 to 3, **characterized in that** the outer circumference of the frame elements (10) and the inner cross section of the housing (1) are rectangular.

5. The system as claimed in one of claims 1 to 4, **characterized in that** the outer circumference of the frame elements (10), at least partially, but preferably over the entire circumference, is greater than the circumference of the foil stack in the direction of the longitudinal axis of the housing.

6. The system as claimed in one of claims 1 to 5, **characterized in that** the frame elements (10) are produced from thermally insulating material, preferably from ceramic.

7. The system as claimed in one of claims 1 to 6, **characterized in that** the adjacent frame elements (10) of two base modules (2, 2', 2") arranged one behind another in the housing (1) rest on each other and form a cavity (11), which is bounded on four sides by the inner faces of the frame openings and on two sides in each case by one side of the foil stacks connected to the frames.

8. The system as claimed in one of claims 1 to 7, **characterized in that** the frame elements (10) have pressure sensors and/or temperature sensors (6) in the frame opening.

9. The system as claimed in one of claims 1 to 8, **characterized in that** one or more of the foils in a foil stack is/are constructed as fluid guide elements which on the surface have channels which lead from that side of the foil stack at which fluid flows in through said foil stack to the opposite side of the foil stack,
and/or
one of more of the foils in a foil stack is/are constructed as heat transfer elements which on their surface have channels and at least one inlet opening and an outlet opening for a cooling or heating fluid, the fluid-carrying areas of the heat transfer elements being sealed off against flooding of fluid with respect to the fluid-carrying areas of the fluid guide elements,
and/or
one or more of the foils in a foil stack is/are constructed as temperature and/or pressure sensor elements, heating elements or a combination thereof.

10. The system as claimed in one of claims 1 to 9, **characterized in that** at least one base module is constructed as a fluid mixer which in the foil stack has channels which lead from a fluid inlet of the housing to a mixing chamber, which is preferably a cavity between the fluid mixer and a further base module arranged to follow the latter in the housing.

11. The system as claimed in claim 10, **characterized in that** the fluid mixer further comprises channels which lead to the mixing chamber from a further fluid inlet of the housing and/or from a base module arranged before the fluid mixer in the housing.

12. The system as claimed in one of claims 1 to 11, **characterized in that** at least one base module is constructed as a reaction section which in the foil stack has channels which lead from a base module arranged before the reaction section in the housing to a base module arranged behind it or to a fluid outlet.

13. The system as claimed in one of claims 1 to 12, **characterized in that** the channels of the reaction section are provided with a catalyst and preferably with a carrier coating arranged between the channel surface and the catalyst.

14. The system as claimed in one of claims 1 to 13, **characterized in that** the housing is produced from metal or ceramic.

15. The system as claimed in one of claims 1 to 14, **characterized in that** electrical and/or fluid connections (17) are provided on the housing wall.

16. The system as claimed in claim 15, **characterized in that** the connections (17) provided on the housing wall is constructed as a connecting strip (16) which preferably extends in the longitudinal direction of the housing (1).

## Revendications

1. Système modulaire à microréaction comportant un boîtier dans lequel sont montés des modules de base fonctionnels, le boîtier comportant au moins une entrée de fluide et au moins une sortie de fluide, les modules fonctionnels étant conformés et disposés en série dans le boîtier de manière à être traversés successivement par le fluide et au moins certains des modules de base étant constitués de plusieurs feuilles sensiblement rectangulaires, en forme de plaques, qui sont superposées en piles et reliées de façon fixe ou amovible, une ou plusieurs des feuilles comportant sur une face ou sur les deux faces des canaux dotés de microstructures, des éléments de capteur, des éléments chauffants ou des combinaisons de ceux-ci et chaque pile de feuilles comportant au moins une feuille qui est dotée en surface de canaux qui sont conformés pour permettre de conduire le fluide d'un côté de la pile de feuilles au côté opposé ou à un côté adjacent de la pile de feuilles, **caractérisé en ce que** les modules de base (2, 2', 2") comportent au moins un élément de cadre (10) qui est disposé perpendiculairement au plan des feuilles et qui est relié à la pile de feuilles de façon fixe ou amovible et de façon étanche au fluide, et **en ce que** les piles de feuilles peuvent être insérées dans le boîtier (1), et peuvent en être retirées, conjointement avec les piles de feuilles sous la forme d'une unité.

2. Système selon la revendication 1, **caractérisé en ce que** la périphérie extérieure des éléments de cadre (10) correspond à la section intérieure du boîtier (1) et porte de façon étanche au fluide contre la paroi intérieure du boîtier.

3. Système selon l'une des revendications 1 ou 2, **caractérisé en ce qu'**un module de base (2, 2', 2") comporte au moins deux éléments de cadre (10) qui sont disposés sur des côtés opposés d'une pile de feuilles.

4. Système selon l'une des revendications 1 à 3, **caractérisé en ce que** la périphérie extérieure des éléments de cadre (10) et la section intérieure du boîtier (1) sont rectangulaires.

5. Système selon l'une des revendications 1 à 4, **caractérisé en ce que** la périphérie extérieure des éléments de cadre (10) est supérieure au moins partiellement, avantageusement sur toute la périphérie, à la périphérie de la pile de feuilles en direction de l'axe longitudinal du boîtier.

6. Système selon l'une des revendications 1 à 5, **caractérisé en ce que** les éléments de cadre (10) sont fabriqués à partir d'un matériau thermiquement isolant, avantageusement à partir de céramique.

7. Système selon l'une des revendications 1 à 6, **caractérisé en ce que** les éléments de cadre adjacents (10) de deux modules de base (2, 2', 2"), disposés l'un derrière l'autre dans le boîtier (1), portent l'un contre l'autre et forment un espace (11) qui est limité sur quatre côtés par les surfaces intérieures des ouvertures de cadre et sur deux côtés par un côté de la pile de feuilles reliée au cadre.

8. Système selon l'une des revendications 1 à 7, **caractérisé en ce que** les éléments de cadre (10) comportent dans l'ouverture de cadre des capteurs de pression et/ou des capteurs de température (6).

9. Système selon l'une des revendications 1 à 8, **caractérisé en ce qu'**une ou plusieurs des feuilles d'une pile de feuilles sont conformées en éléments de conduite de fluide qui comportent en surface des canaux qui vont du côté de la pile de feuilles où arrive le fluide au côté opposé de la pile de feuilles,
et/ou
une ou plusieurs des feuilles d'une pile de feuilles sont conformées en éléments de transfert de chaleur qui comportent en surface des canaux et au moins une ouverture d'entrée et une ouverture de sortie de fluide de refroidissement ou de chauffage, les régions de conduite de fluide des éléments de transfert de chaleur étant rendues étanches par rapport aux régions de conduite de fluide des éléments de conduite de fluide afin d'empêcher le débordement de fluide,
et/ou
une ou plusieurs des feuilles d'une pile de feuilles sont conformées en éléments de capteur de température et/ou de pression, en éléments chauffants ou une combinaison de ceux-ci.

10. Système selon l'une des revendications 1 à 9, **caractérisé en ce que** au moins un module de base est conformé en mélangeur de fluide qui comporte dans la pile de feuilles des canaux qui vont d'une entrée de fluide du boîtier à une chambre de mélange qui est avantageusement un espace entre le mélangeur de fluide et un autre module de base disposé en aval dans le boîtier.

11. Système selon la revendication 10, **caractérisé en ce que** le mélangeur de fluide comporte en outre des canaux qui vont d'une autre entrée de fluide du boîtier et/ou d'un module de base disposé en amont du mélangeur de fluide dans le boîtier à la chambre de mélange.

12. Système selon l'une des revendications 1 à 11, **caractérisé en ce que** au moins un module de base est conformé en section de réaction qui comporte dans la pile de feuilles des canaux qui vont d'un module de base disposé en amont de la section de réaction dans le boîtier à un module de base disposé en aval ou à une sortie de fluide.

13. Système selon l'une des revendications 1 à 12, **caractérisé en ce que** les canaux de la section de réaction sont dotés d'un catalyseur et avantageusement d'un revêtement de support disposé entre la surface des canaux et le catalyseur.

14. Système selon l'une des revendications 1 à 13, **caractérisé en ce que** le boîtier est fabriqué à partir d'un métal ou d'une céramique.

15. Système selon l'une des revendications 1 à 14, **caractérisé en ce qu'**il est prévu sur la paroi de boîtier des bornes électriques et/ou de fluide (17).

16. Système selon la revendication 15, **caractérisé en ce que** les bornes (17) prévus sur la paroi de boîtier sont conformés en réglette de raccordement (16) qui s'étend avantageusement dans la direction longitudinale du boîtier (1).
